(19) Europäisches Patentamt
European Patent Office
Office européen des brevets

(11) **EP 1 901 026 A1**

(12) **EUROPÄISCHE PATENTANMELDUNG**

(43) Veröffentlichungstag:
**19.03.2008 Patentblatt 2008/12**

(51) Int Cl.:
**G01B 7/12** *(2006.01)*          **H02G 1/12** *(2006.01)*

(21) Anmeldenummer: **07122677.3**

(22) Anmeldetag: **27.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **05.10.2005 EP 05109264**

(62) Dokumentnummer(n) der früheren Anmeldung(en) nach Art. 76 EPÜ:
**06121331.0 / 1 772 701**

(71) Anmelder: **Komax Holding AG**
**6036 Dierikon (CH)**

(72) Erfinder:
• **Lurati, Stefan**
  **6221, Rickenbach (CH)**
• **Häfliger, Benno**
  **6003, Luzern (CH)**

(74) Vertreter: **Blöchle, Hans et al**
**Seestrasse 55 Postfach**
**6052 Hergiswil / NW (CH)**

Bemerkungen:
Diese Anmeldung ist am 07-12-2007 als Teilanmeldung zu der unter INID-Code 62 erwähnten Anmeldung eingereicht worden.

(54) **Einrichtung zur Bestimmung des Leiterdurchmessers eines Kabels**

(57) Diese Kabelbearbeitungseinrichtung besteht aus einer ersten Vorschubeinrichtung, einem Messerkopf (5) und aus einer zweiten Vorschubeinrichtung. Das Kabel wird mittels der ersten Vorschubeinrichtung von einem Kabelvorrat abgezogen und je nach gewünschter Kabelabschnittlänge vorgeschoben. Nach dem Durchtrennen des Kabels mittels des Messerkopfes (5) werden die Kabelenden des Kabelabschnittes bearbeitet. Die Kabelbearbeitungseinrichtung ist mit einer Einrichtung zur Bestimmung des Leiterdurchmessers eines Kabels versehen. Ein Einkoppler beaufschlagt das Kabel mit einem Signal (S2), das mittels eines Auskopplers (15.1) als Signal (S3.1) abtastbar ist und mittels einer Signaleinrichtung (8) auswertbar ist, wobei Messer des Messerkopfes (5) beim Einschneiden des Kabels den Kabelleiter berühren und das Signal (S2) einkoppeln bzw. das ausgekoppelte Signal (S3.1) verändern.

FIG. 6

EP 1 901 026 A1

**Beschreibung**

Die Erfindung betrifft eine Einrichtung zur Bestimmung des Leiterdurchmessers eines Kabels mit einem Einkoppler zur Beaufschlagung des Kabels mit einem Signal und einem Auskoppler zur Abtastung des Signals auf dem Kabel und einer Signaleinheit zur Erzeugung des beaufschlagenden Signals und zur Messung des Signals auf dem Kabel, gemäss der Definition des unabhängigen Patentanspruchs.

Aus der Schrift JP 11299036 ist eine Einrichtung zur Bestimmung des Durchmessers des Leiters eines Kabels bekannt geworden. Eine Spule koppelt ein Signal auf das zu bestimmende Kabel ein. Beim Abisoliervorgang des Kabelendes schneiden Abisoliermesser den Mantel des Kabels bis zum Kabelleiter ein und stellen einen elektrischen Kontakt mit dem Kabelleiter her, wobei das eingekoppelte Signal auf die Messer gelangt. Die Messer sind an eine Messeinrichtung angeschlossen, die den Kontakt der Messer mit dem Kabelleiter als Spannungsabfall über einem Widerstand feststellt.

Ein Nachteil der bekannten Einrichtung liegt darin, dass der Messerkopf mit den Abisoliermessern gegenüber einem fixen Potential bzw. Masse isoliert sein muss, damit das auf den Leiter eingekoppelte Signal am Messerkopf bzw. an den Messern abgreifbar ist.

Aus der Schrift JP 07227022 ist eine Einrichtung zur Abtastung des Kabelleiters eines Kabels bekannt geworden mit einem mechanischen Einkoppler zur Beaufschlagung des Kabels mit einem Signal und mit einem berührungslosen Auskoppler zur Abtastung des Signals auf dem Kabel und mit einer Signaleinheit zur Erzeugung des beaufschlagenden Signals auf dem Kabel.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Einrichtung zu schaffen, mittels der der Leiterdurchmesser eines Kabels einfach bestimmbar ist.

Vorteilhafte Weiterbildungen der Erfindung sind in den abhängigen Patentansprüchen angegeben.

Die durch die Erfindung erreichten Vorteile sind im wesentlichen darin zu sehen, dass ein herkömmlicher Messerkopf bzw. ein elektrisch an Masse gelegter Messerkopf verwendet werden kann. Ausserdem muss das Kabelende nicht mit der Masse bzw. einem fixen Potential verbunden werden. Das Kabelende in einem Kabelfass zu finden wäre ohnehin mühsam und zeitraubend. Zur Bestimmung des Leiterdurchmessers muss der Messerkopf nicht umgerüstet werden. Der zur Auskopplung des eingekoppelten Signals notwendige Sensor ist ein elektrisch isoliertes Kabelführungsteil. Das Kabelführungsteil zu isolieren, ist wesentlich einfacher und billiger als den Messerkopf zu isolieren. Ausserdem ist der Sensor auf unterschiedlichen Kabelbearbeitungseinrichtungen verwendbar. Mit der erfindungsgemässen Einrichtung kann die Bestimmung des Leiterdurchmessers automatisiert werden, was wiederum die Einrichtzeit der Kabelbearbeitungseinrichtung wesentlich verkürzt.

Bei der erfindungsgemässen Einrichtung zur Bestimmung des Leiterdurchmessers eines Kabels mit einem Einkoppler zur Beaufschlagung des Kabels mit einem Signal und einem Auskoppler zur Abtastung des Signals auf dem Kabel und einer Signaleinheit zur Erzeugung des beaufschlagenden Signals und zur Messung des Signals auf dem Kabel erfolgt die Signaleinkopplung direkt über elektrisch isolierte Kontaktelemente am nacheilenden Kabelende und zur Signalauskopplung ist eine das nacheilende Kabelende führende Kabelführung vorgesehen, die das Signal berührungslos auskoppelt und bei einer Signaländerung ist die Position des Kontaktelementes erfassbar und aus der erfassten Position ist der Leiterdurchmesser bestimmbar.

Anhand der beiliegenden Figuren wird die vorliegende Erfindung näher erläutert.

Es zeigen:

Fig. 1
eine Kabelbearbeitungseinrichtung mit einer Einrichtung zur Bestimmung des Leiterdurchmessers eines Kabels,

Fig. 2
einen Einkoppler zur Beaufschlagung des Kabels mit einem Signal,

Fig. 3
v-förmige Messer zum Einschneiden des Kabelmantels und zur Bestimmung des Leiterdurchmessers des Kabels,

Fig. 4
einen Auskoppler zur Abtastung des Signals auf dem Kabel,

Fig. 5
eine Kabelbearbeitungseinrichtung mit einem Schlitzmesser und

Fig. 6
eine Ausführungsvariante der Signaleinkopplung und der Signalauskopplung.

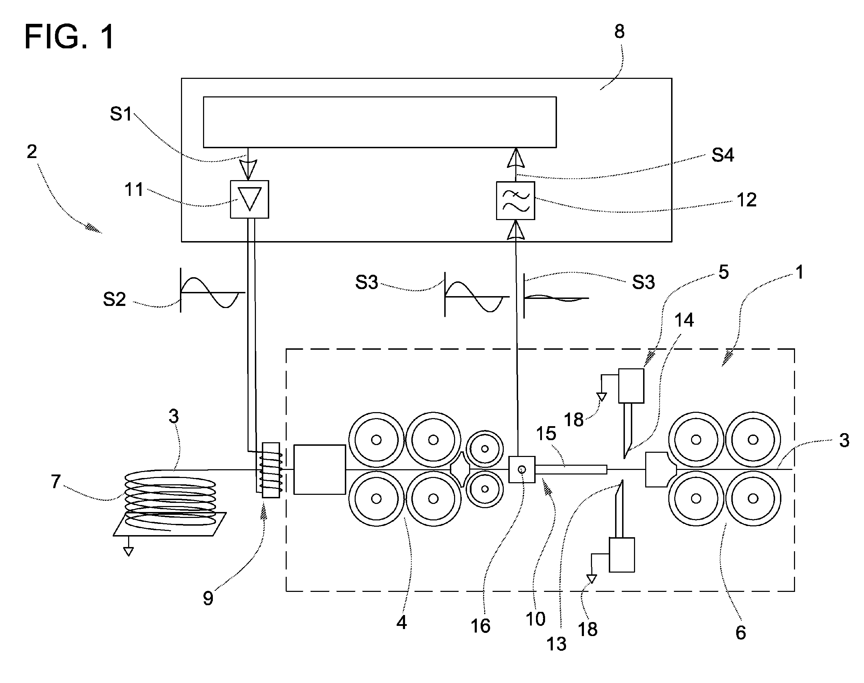

Fig. 1 zeigt eine Kabelbearbeitungseinrichtung 1 mit einer Einrichtung zur Bestimmung des Leiterdurchmessers eines Kabels 3. Die in Fig. 1 gezeigte Kabelbearbeitungseinrichtung 1 besteht beispielsweise aus einer ersten Vorschubeinrichtung 4, einem Messerkopf 5 und aus einer zweiten Vorschubeinrichtung 6. Das Kabel 3 wird mittels der ersten Vorschubeinrichtung 4 von einem Kabelvorrat 7, beispielsweise in einem Fass gelagertes Kabel, abgezogen und je nach gewünschter Kabelabschnittlänge vorgeschoben. Nach dem Durchtrennen des Kabels 3 mittels des Messerkopfes 5 werden die Kabelenden des Kabelabschnittes bearbeitet. (Beispielsweise abisolieren, Tülle aufsetzen, Crimpkontakt anschlagen). Das voreilende Kabelende des Kabels 3 kann auch vor dem Abtrennen des Kabelabschnittes bearbeitet werden. Die zur Bearbeitung der Kabelenden notwendigen Bearbeitungsstationen und Greifer zum Zubringen der Kabelenden sind nicht dargestellt.

Das Kabel 3 besteht üblicherweise aus einem Kabelleiter, der von einem elektrisch isolierenden Mantel umgeben ist. Für die Bearbeitung der Kabelenden ist es unumgänglich, den Kabelleiterdurchmesser zu kennen bzw. zu bestimmen. Vom Kabelleiterdurchmesser abhängig ist beispielsweise die Eindringtiefe der Abisoliermesser, die Wahl des Crimpkontaktes und die Wahl der Tülle, die Zustellung der Crimppresse, etc.

Die in Fig. 1 gezeigte Einrichtung 2 zur Bestimmung des Leiterdurchmessers eines Kabels 3, im weiteren Messeinrichtung 2 genannt, besteht im wesentlichen aus einer Signaleinheit 8, einem Einkoppler 9 und aus einem Auskoppler 10. Die Signaleinheit 8 erzeugt ein Ausgangssignal S1, beispielsweise ein Sinussignal von 40 kHz mit variabler Amplitude (andere Signalformen sind auch möglich), das einem Verstärker 11 zugeführt wird, der das Signal S1 verstärkt und als Ausgangssignal S2 dem Einkoppler 9 zuführt. Mit der Regelung der Signalamplitude am Einkoppler 9 kann sich die Messeinrichtung 2 automatisch an die jeweilige Situation (Kabeltyp, Führungsart des Kabels, Anordnung des Einkopplers bzw. Auskopplers an der Kabelbearbeitungseinrichtung) anpassen. Der Einkoppler 9 überträgt das Ausgangssignal S1 induktiv auf den Kabelleiter. Am einen Ende ist der Kabelvorrat 7 kapazitiv gegen ein fixes Potential bzw. Masse, im weiteren Masse 18 genannt, verbunden, am anderen Kabelende kann mittels des elektrisch isolierten Auskopplers 10 berührungslos, beispielsweise kapazitiv ein Eingangssignal S3 abgetastet werden, das einem Signalaufbereiter 12 zugeführt wird. Das Signal S3 wird gleichgerichtet, gefiltert und verstärkt und als Eingangssignal S4 der Signaleinrichtung 8 zugeführt. Falls das Eingangssignal S3 die notwendige Amplitude nicht erreicht, erzeugt die Signaleinrichtung 8 eine Fehlermeldung. Sobald die an Masse 18 gelegten Messer 13,14 des Messerkopfes 5 den Kabelleiter berühren, nimmt die Amplitude des Eingangssignales S3 ab. Aufgrund der Signaländerung (Amplitudenänderung unabhängig von der Phasenverschiebung des Signals) erkennt die Signaleinrichtung 8, dass die Messer 13,14 den Kabelleiter berühren. Gleichzeitig wird die Zustellung (Eindringtiefe) bzw. die Position der beispielsweise flachen oder v-förmigen Messer 13,14 erfasst und daraus der Durchmesser des Kabelleiters bestimmt.

Anstelle der in das Kabel 3 eindringenden und den Kabelleiter kontaktierenden Messer können als Kontaktelemente beispielsweise auch motorisierte Nadeln vorgesehen sein, deren Eindringtiefe messbar ist und die bis zum Kabelleiter reichen.

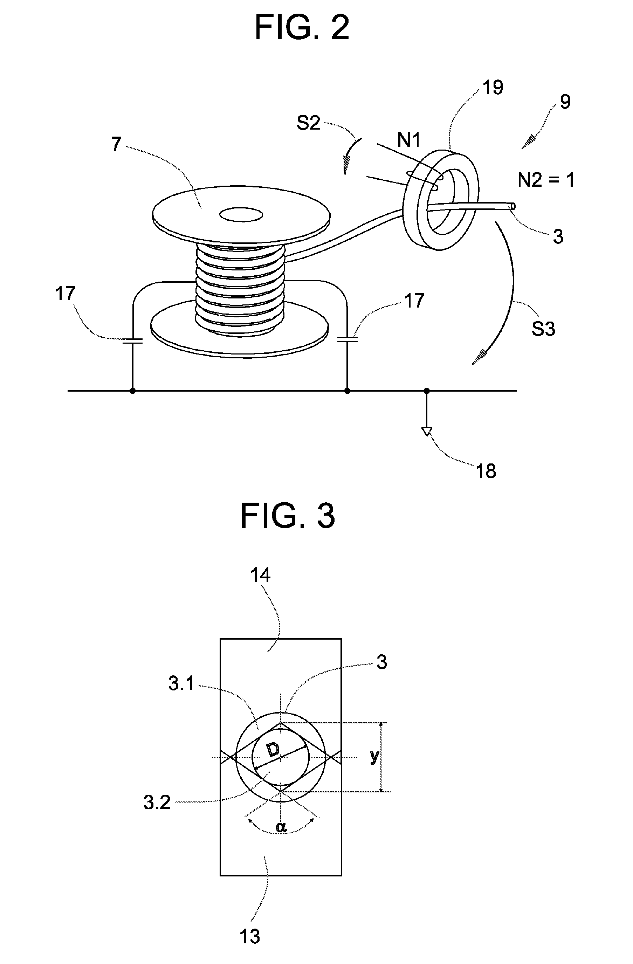

Fig. 2 zeigt den Einkoppler 9 zur Beaufschlagung des Kabels 3 mit dem Signal S2. Der Kabelvorrat 7 ist mittels kapazitiver Verbindung 17 an Masse 18 gelegt. Das Kabel 3 wird durch eine Spule 19 geführt und bildet dabei eine einzelne Sekundärwicklung N2 der auf dem Prinzip des Transformators wirkenden Spule 19 mit einer Primärwicklung N1. Für eine möglichst grosses sekundärseitiges Signal S3, muss das primärseitige Signal S2 möglichst gross sein und das Windungsverhältnis N1/N2 klein sein.

Für Sonderkabel wie beispielsweise Flachkabel kann die Spule 19 anstelle eines Ringkernes einen U-förmigen Kern aufweisen.

Der Auskoppler 10 besteht im wesentlichen aus einer Kabelführung 15, beispielsweise ein Rohr, die elektrisch gegenüber Masse 18 isoliert ist und die als kapazitiver Sensor wirkt bzw. an der ein kapazitiver Sensor angeordnet ist. Das Eingangssignal S3 ist mittels Sensor abtastbar. Die Kabelführung 15 kann um eine Drehachse 16 beweglich angeordnet sein.

Fig. 3 zeigt v-förmige Messer 13,14 zum Einschneiden des Kabelmantels 3.1 und zur Bestimmung des Leiterdurchmessers D des Kabelleiters 3.2. Der Leiterdurchmesser D berechnet sich nach der folgenden Formel:

$$D = y \cdot \sin(\hat{A}/2)$$

wobei y aus der Messerposition (mittels Drehgeber des Messerantriebes oder mittels Linearmassstab bestimmbar) ableitbar ist und Ä der Öffnungswinkel des Messers ist. Sobald die Messer 13,14 beim Einschneiden den Kabelleiter 3.2 berühren wird das Signal S3 verändert, was wiederum die Erfassung der momentanen Messerposition y auslöst.

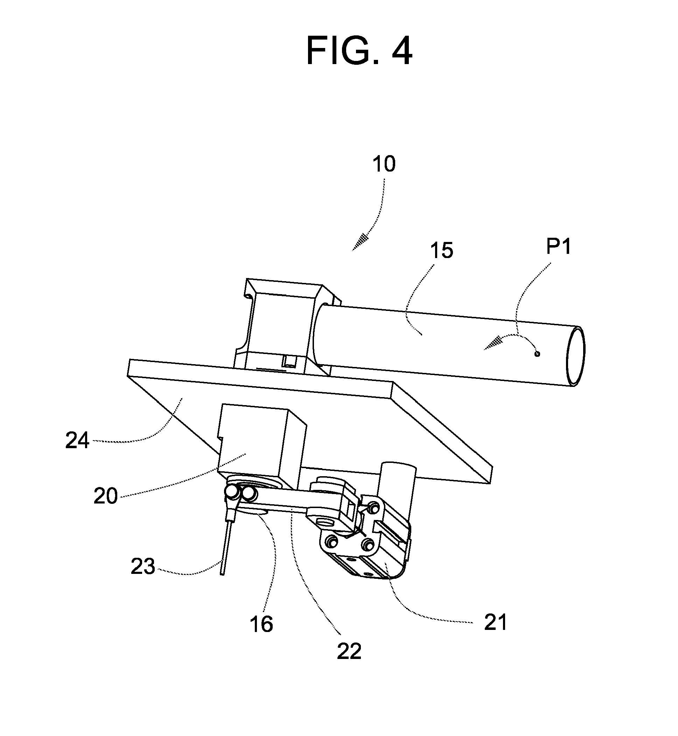

Fig. 4 zeigt den Auskoppler 10 zur Abtastung des Signals S3 auf dem Kabel 3. Die Kabelführung 15 ist an der Drehachse 16 angeordnet, die an einem Lagerblock 20 elektrisch isoliert drehbar gelagert ist. Der Lagerblock 20 wird getragen von einem Gehäuseteil 24. Ein am Gehäuseteil 24 angeordneter Hebelantrieb 21 betätigt einen Hebel 22, der die Drehachse 16 dreht. Mit der Drehung der Drehachse 16 wird die Kabelführung 15 wie mit dem Pfeil P1 symbolisiert aus der Kabellängsachse geschwenkt. Ein das Signal S3 führendes Signalkabel 23 steht in elektrischer Verbindung mit der Kabelführung 15.

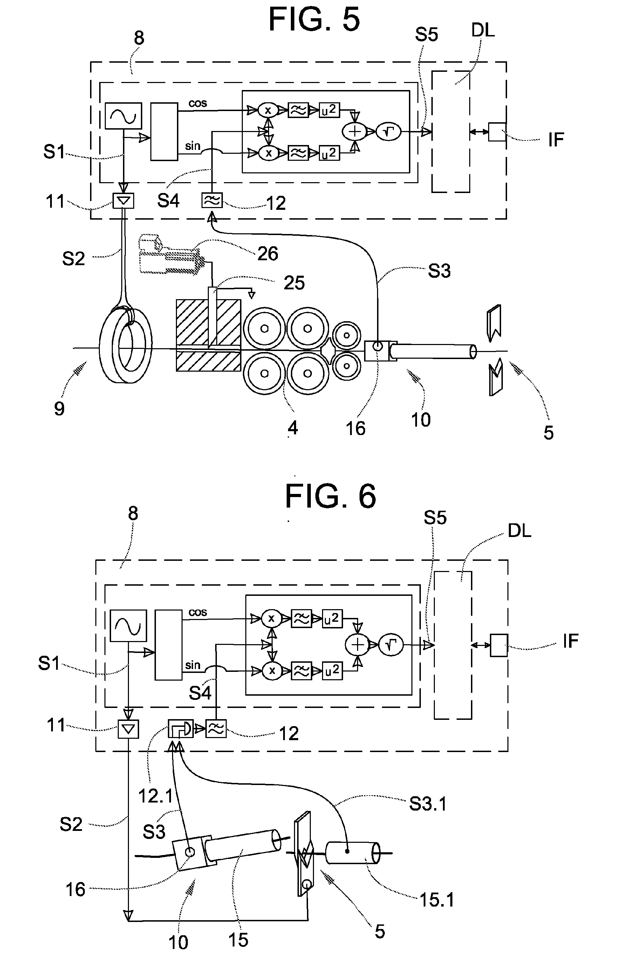

Fig. 5 zeigt eine Kabelbearbeitungseinrichtung 1 mit einem Schlitzmesser 25. Mit dem mittels Messerantrieb 26 zustellbaren Schlitzmesser 25 kann das Kabel 3 in der Kabellängsachse bis auf den Kabelleiter eingeschnitten bzw. geschlitzt werden. Anschliessend wird das Kabel vor und nach dem Schlitz mittels der Messer 13,14 eingeschnitten und die Isolationshülse entfernt. Falls das an Masse 18 gelegte Schlitzmesser 25 den Kabelleiter berührt, nimmt die Amplitude des Eingangssignales S3 des Auskopplers 10 ab. Aufgrund der Signaländerung (Amplitudenänderung unabhängig von der Phasenverschiebung des Signals) erkennt die Signaleinrichtung 8, dass das Schlitzmesser 25 den Kabelleiter berührt. Gleichzeitig wird die Zustellung (Eindringtiefe) bzw. die Position des Schlitzmessers 25 erfasst und daraus der Durchmesser des Kabelleiters bestimmt bzw. die Eindringtiefe beim nächsten Einschnitt verringert.

Fig. 6 zeigt eine Ausführungsvariante der Signaleinkopplung und der Signalauskopplung. Bei dieser Variante kann auch das nacheilende Kabelende bei der Bearbeitung in Sachen Kabeldurchmesser bzw. Eindringtiefe überwacht werden. Die Signaleinkopplung erfolgt direkt über den isolierten Messerkopf 5 mit den Messern 13,14. Die Kabelführung 15 ist aus der Kabeltransportrichtung geschwenkt. Eine weitere Kabelführung 15.1 tastet das Eingangssignal S3.1 kapazitiv ab, wobei das Eingangssignal S3.1 der Vorstufe 12.1 des Signalaufbereiters 12 zugeführt wird.

Fig. 5 und Fig. 6 zeigen Einzelheiten der Signaleinrichtung 8 zur Bewertung des Eingangssignals S4. Das Eingangssignal S4 wird mit zwei um 90° verschobenen und die Frequenz des Signals S2 aufweisenden Signalen sin, cos multipliziert. (Die multiplizierende Einrichtung ist mit x symbolisiert). Mit der Multiplikation wird ein vom Eingangssignal S4 phasenunabhängiges Signal erzeugt. Mit der Signalmultiplikation entstehen neue unerwünschte Frequenzen, die mittels Filter unterdrückt werden. (Die filternde Einrichtung ist mit zwei übereinander angeordneten Sinussymbolen gekennzeichnet). Dann werden die Signale quadriert (die quadrierende Einrichtung ist mit $u^2$ symbolisiert) und anschliessend addiert und aus der Summe die Wurzel gezogen (die addierende Einrichtung ist mit + und die wurzelziehende Einrichtung ist mit einem mathematischen Wurzelzeichen gekennzeichnet). Das erzeugte Signal S5 ist immer positiv und vom Eingangssignal S4 phasenunabhängig. Ein mit DL bezeichneter Auswerter erzeugt aufgrund der Signaländerung des Signals S5 Statussignale wie beispielsweise eine Fehlermeldung "Kabelleiter berührt" und leitet die Statussignale via einer Schnittstelle IF an die Maschinensteuerung weiter.

Der Einkoppler 9 kann als Ausführungsvariante auf dem kapazitiven Prinzip arbeiten und der Auskoppler 10 kann als Ausführungsvariante auf dem induktiven Prinzip arbeiten.

Die Messeinrichtung 2 kann auch zur Abisolierüberwachung verwendet werden. Falls beim Abisolieren die Messer 13,14,25 den Kabelleiter berühren erzeugt der Signalprozessor 8 wie oben erwähnt eine Fehlermeldung.

Im weiteren kann die automatische Bestimmung des Kabelleiterdurchmessers beim Verarbeiten des gleichen Kabeltyps von Zeit zu Zeit oder vor jedem Abisoliervorgang erfolgen. Die Messeinrichtung kennt damit immer den aktuellen Kabelleiterdurchmesser.

**Patentansprüche**

1. Einrichtung zur Bestimmung des Leiterdurchmessers eines Kabels (3) mit einem Einkoppler (9) zur Beaufschlagung des Kabels (3) mit einem Signal (S2) und einem Auskoppler (18) zur Abtastung des Signals (S3) auf dem Kabel (3) und einer Signaleinheit (8) zur Erzeugung des beaufschlagenden Signals (S2) und zur Messung des Signals (S3) auf dem Kabel (3),
**dadurch gekennzeichnet,**
**dass** zur Abtastung des Signals (S3) auf dem Kabel (3) ein berührungslos arbeitender Auskoppler (10) vorgesehen ist, wobei das Signal (S3) mittels mindestens eines den Kabelleiter kontaktierenden Kontaktelementes (13,14) veränderbar ist.

2. Einrichtung nach Anspruch 1,
**dadurch gekennzeichnet,**
**dass** der Auskoppler (10) auf dem kapazitiven Prinzip arbeitet.

3. Einrichtung nach einem der Ansprüche 1 oder 2,
**dadurch gekennzeichnet,**
**dass** die Signaleinkopplung über ein elektrisch isoliertes Kontaktelement (13,14) am nacheilenden Kabelende erfolgt und zur Signalauskopplung eine das nacheilende Kabelende führende Kabelführung (15.1) vorgesehen ist, die das Signal (53.1) berührungslos auskoppelt.

4. Einrichtung nach einem der Ansprüche 1 bis 3,
**dadurch gekennzeichnet,**
**dass** bei einer Signaländerung die Position des Kontaktelementes (13,14) erfassbar ist und aus der erfassten Position der Leiterdurchmesser bestimmbar ist.

5. Einrichtung nach einem der Ansprüche 1 bis 4,
**dadurch gekennzeichnet,**
**dass** die Signaleinkopplung direkt über einen elektrisch isolierten Messerkopf (5) mit Messern (13,14) erfolgt, die den Kabelleiter des Kabels (3) beim Einschneiden berühren und das Signal (S2) einkoppeln bzw. das ausgekoppelte Signal (S3.1) verändern.

6. Einrichtung nach einem der vorhergehenden Ansprüche,
**dadurch gekennzeichnet,**
**dass** der Leiterdurchmesser (D) nach der Formel:

$$D = y \cdot \sin(Â/2)$$

berechenbar ist, wobei y aus der Messerposition (mittels Drehgeber des Messerantriebes oder mittels Linearmassstab) bestimmbar ist und Ä der Öffnungswinkel des Messers ist.

FIG. 1

# FIG. 2

# FIG. 3

# FIG. 4

# FIG. 5

# FIG. 6

**Europäisches Patentamt**

# EUROPÄISCHER RECHERCHENBERICHT

Nummer der Anmeldung

EP 07 12 2677

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PATENT ABSTRACTS OF JAPAN Bd. 1995, Nr. 11, 26. Dezember 1995 (1995-12-26) & JP 07 227022 A (FUJIKURA LTD), 22. August 1995 (1995-08-22) * Absätze [0002] - [0007] * | 1-3,5 | INV. G01B7/12 H02G1/12 |
| A | * Absätze [0016] - [0042]; Abbildungen 1-8 * ----- | 4,6 | |
| X | JP 07 236214 A (FUJIKURA LTD) 5. September 1995 (1995-09-05) * Absätze [0001] - [0018] * | 1-3,5 | |
| A | * Abbildungen 1-6 * ----- | 4,6 | |
| A | PATENT ABSTRACTS OF JAPAN Bd. 2000, Nr. 15, 6. April 2001 (2001-04-06) & JP 2000 354315 A (ASAHI SEIKI KK), 19. Dezember 2000 (2000-12-19) * Zusammenfassung * ----- | 1-6 | |
| D,A | PATENT ABSTRACTS OF JAPAN Bd. 2000, Nr. 01, 31. Januar 2000 (2000-01-31) & JP 11 299036 A (SUMITOMO WIRING SYST LTD), 29. Oktober 1999 (1999-10-29) * Zusammenfassung * ----- | 1-6 | **RECHERCHIERTE SACHGEBIETE (IPC)** G01B H02G |
| A | PATENT ABSTRACTS OF JAPAN Bd. 018, Nr. 652 (E-1642), 12. Dezember 1994 (1994-12-12) & JP 06 253430 A (JAPAN AUTOMAT MACH CO LTD), 9. September 1994 (1994-09-09) * Zusammenfassung * ----- | 1-6 | |

Der vorliegende Recherchenbericht wurde für alle Patentansprüche erstellt

| Recherchenort | Abschlußdatum der Recherche | Prüfer |
|---|---|---|
| München | 24. Januar 2008 | Kunz, Lukas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 12 2677

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2008

| Im Recherchenbericht angeführtes Patentdokument | Datum der Veröffentlichung | Mitglied(er) der Patentfamilie | Datum der Veröffentlichung |
|---|---|---|---|
| JP 07227022 A | 22-08-1995 | KEINE | |
| JP 7236214 A | 05-09-1995 | KEINE | |
| JP 2000354315 A | 19-12-2000 | JP 3261529 B2 | 04-03-2002 |
| JP 11299036 A | 29-10-1999 | JP 3233098 B2 | 26-11-2001 |
| JP 06253430 A | 09-09-1994 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11299036 B
- JP 07227022 B